# EUROPÄISCHE PATENTSCHRIFT

(11) **EP 1 518 313 B1**
(45) Veröffentlichungstag und Bekanntmachung des Hinweises auf die Patenterteilung: **25.01.2006**
(21) Anmeldenummer: 03778253.9
(22) Anmeldetag: 11.11.2003
(51) Int. Cl.: H02K 5/14

(54) **TRÄGERTEIL FÜR KOMMUTATORBÜRSTEN EINES ELEKTROMOTORS**
SUPPORT ELEMENT FOR COMMUTATOR BRUSHES OF AN ELECTRIC MOTOR
ELEMENT SUPPORT DESTINE A DES BALAIS DE COMMUTATEUR D'UN MOTEUR ELECTRIQUE

(30) Priorität: 04.12.2002 DE 10256831
(43) Veröffentlichungstag der Anmeldung: 30.03.2005
(73) Patentinhaber: SIEMENS AKTIENGESELLSCHAFT, 80333 München (DE)
(72) Erfinder: BENDER, Günther, 61191 Rodheim (DE)
(86) Internationale Anmeldenummer: PCT/DE2003/003726
(87) Internationale Veröffentlichungsnummer: WO 2004/051825

(56) Entgegenhaltungen:
- DE-U- 7 609 316
- GB-A- 1 062 700
- US-A- 4 596 941
- US-A- 4 746 829
- US-A- 5 734 219

## Beschreibung

Die Erfindung bezieht sich auf ein Trägerteil für Kommutatorbürsten eines Elektromotors.

Die Anordnung von Kommutatorbürsten für einen Elektromotor sind bekannt. In der DE 101 12 427 A1 wird eine elektromotorische Stelleinheit für ein Zumesssystem einer Brennkraftmaschine beschrieben. Dabei wird der Bürstenhalter als sogenannter Hammerbürstenhalter ausgebildet, der zwei jeweils eine Kommutatorbürste tragende, frei auskragende, stromleitende Blattfedern aufweist, die mit ihrem einen Ende an einer Trägerplatte eingespritzt und mit zu Steckkontakten des Steckers führenden elektrischen Leitern verbunden sind. Die Blattfedern bestehen aus rechteckigen Blechstreifen. Bei einem Kraftfahrzeug ist eine ortsfeste, konstante, mechanische Kontaktierung des Kollektors mit den Kommutatorbürsten von entscheidender Bedeutung. Bei der Anordnung der Kommutatorbürsten nach dem Stand der Technik ist nachteilig, dass bei der Einleitung von mechanischen Störungen in das System, was beispielsweise durch Schwingungen von außen erfolgen kann, es sehr leicht zum Abheben der Kommutatorbürsten vom Kommutator kommen kann. Die Folgen sind Stromunterbrechung mit Bürstenfeuer, hoher Kohleverschleiß durch Abbrand, das Entstehen von Induktionsspannungsspitzen sowie die Instabilität von elektrischen Regelkreisen.

Aus der DE 76 09 316 U, dem nächstliegenden Stand der Technik ist ein Trägerteil der eingangs beschriebenen Art bekannt. Bei diesem ist der trapezförmige Bereich vollständig versteift, so daß er zum Aufbau einer Anlagekraft nichts beitragen kann.

Die GB 1 062 700 beschreibt einen zwischen äußeren und inneren zapfenförmigen Anschlägen eingespannten Bürstenhalter, während die US 4,596,941 eine Einspannung über einen Stechkontakt beschreibt. Dieses Dokument beschreibt auch eine Verrastung des Bürstenträgers in angehobener Stellung. Die US 5,734,219 beschreibt ein Bürstensystem mit drei federnd anliegenden Bürsten.

Der Erfindung liegt daher die Aufgabe zugrunde, ein Trägerteil für Kommutatorbürsten zu schaffen, bei dem ein Abheben der Kommutatorbürsten vom Kommutator auch beim Einleiten größerer mechanischer Störungen weitgehend vermieden wird.

Die der Erfindung augrundeliegende Aufgabe wird durch die Mermals Kombination gemäss kennzeichnendem Teil aus Anspruch 1 gelöst.

Das Trägerteil ist in der Regel nahezu kreisrund und flächenförmig ausgebildet und weist eine mittige Aussparung für den Kollektor und den Kommutator des Elektromotors auf, die ebenfalls kreisrund ausgebildet ist. Für die Biegefedern eignen sich je nach Temperaturanforderungen verschiedene Federmaterialien, insbesondere bei höheren Temperaturen rostfreie Federstähle. Beispielsweise kann dabei als Werkstoff X10CrNi 18-8 eingesetzt werden. Die Biegefedern weisen jeweils an ihrer, der Kommutatorbürste abgewandten Seite in der Abwicklung eine Trapezform auf. Unter der Abwicklung ist dabei die Biegefeder im unbelasteten Zustand, also der Blechstreifen an sich, zu verstehen. Es hat sich in überraschender Weise gezeigt, dass durch die Anordnung des Trägerteils am Elektromotor ein Abheben der Kommutatorbürsten vom Kommutator auch bei größeren mechanischen Störungen, die von Außen einwirken, weitgehend vermieden werden kann. Durch die Trapezform einer jeden Biegefeder an ihrer, der Kommutatorbürste abgewandten Seite wird die Beanspruchung an der Einspannstelle zwischen dem äußeren Anschlag und dem inneren Anschlag verringert. Gleichzeitig wird durch die Krümmung der Biegefedern die Einwirkung von Torsionskräften an den Kommutatorbürsten verringert oder nahezu vollständig vermieden, so dass die Kommutatorbürsten stets in direktem, vollständigem Kontakt mit dem Kommutator stehen. Weiterhin fluchtet die der Einspannung abgewandte, gedachte Kante K des Trapezes mit der Materialversteifung. Dies bedeutet, dass die der Einspannung abgewandte, gedachte Kante K des Trapezes direkt an der Materialversteifung anliegt. Ausserdem steht der Bereich der Trapezform der jeweiligen Biegefeder vollständig für die Aufnahme von Biegekräften zur Verftlgung. Dies wirkt sich ebenfalls positiv auf die Kontaktierung der Kommutatorbürsten mit dem Kommutator aus. Daher kommt es nicht zu einer Stromunterbrechung mit Bürstenfeuer.

Eine bevorzugte Ausgestaltung der Erfindung besteht darin, dass der äußere Anschlag eine zur jeweiligen Biegefeder geneigte Krümmung aufweist. Die geneigte Krümmung des äußeren Anschlags wirkt ebenfalls einer Überbeanspruchung der Biegefeder direkt an der Einspannstelle entgegen, da die Biegefeder bei der Einwirkung größerer Biegekräfte in Richtung des äußeren Anschlags nahezu an dem äußeren Anschlag abrollen kann. Eine plastische Verformung der Biegefeder wird somit in vorteilhafter Weise vermieden.

Gemäß einer weiteren bevorzugten Ausgestaltung der Erfindung ist als innerer Anschlag eine Steckerhülse angeordnet. Dabei kann es sich beispielsweise um eine Steckerhülse nach DIN 46340 handeln. Dabei ist vorteilhaft, dass die Biegefeder unmittelbar an ihrer Einspannstelle mit elektrischem Strom beaufschlagt werden kann, wobei zwischen dem inneren Anschlag und der jeweiligen Biegefeder keine zusätzlichen Teile angeordnet werden müssen.

Eine weitere bevorzugte Ausgestaltung der Erfindung besteht darin, dass für mindestens eine Biegefeder an ihrem der jeweiligen Einspannung abgewandten Ende eine senkrecht zur Längsrichtung des Trägerteils einfahrbare Verrastung angeordnet ist. Bei der Verrastung handelt es sich in der Regel um einen einfahrbaren Stift, der im eingefahrenen Zustand die Biegefeder entrastet, so dass die jeweilige Kommutatorbürste an dem Kommutator angepresst wird. Dieses erleichtert in vorteilhafter weise die Montage bzw. Demontage, da die Zugänglichkeit des Kommutators verbessert wird.

Gemäß einer weiteren bevorzugten Ausgestaltung der Erfindung ist vorgesehen, dass drei Kommutatorbürsten einzeln auf jeweils einer Biegefeder angeordnet sind. Es werden somit insgesamt drei Kommutatorbürsten und drei Biegefedern angeordnet, wobei auf jeder Biegefeder eine Kommutatorburste angeordnet ist. Auf diese Weise ist eine gute Betriebssicherheit auch bei größeren Elektromotoren gegeben.

Die Erfindung wird nachfolgend anhand der Zeichnung (Fig. 1 bis Fig. 3a), b)) näher und beispielhaft erläutert.
- Fig. 1: zeigt die Draufsicht auf das Trägerteil für Kommutatorbürsten, teilweise im Längsschnitt.
- Fig. 2: zeigt die gekrümmte Biegefeder im eingespannten Zustand.
- Fig. 3a), b): zeigt alternative Ausgestaltungen einer Biegefeder in Form der jeweiligen Abwicklung.

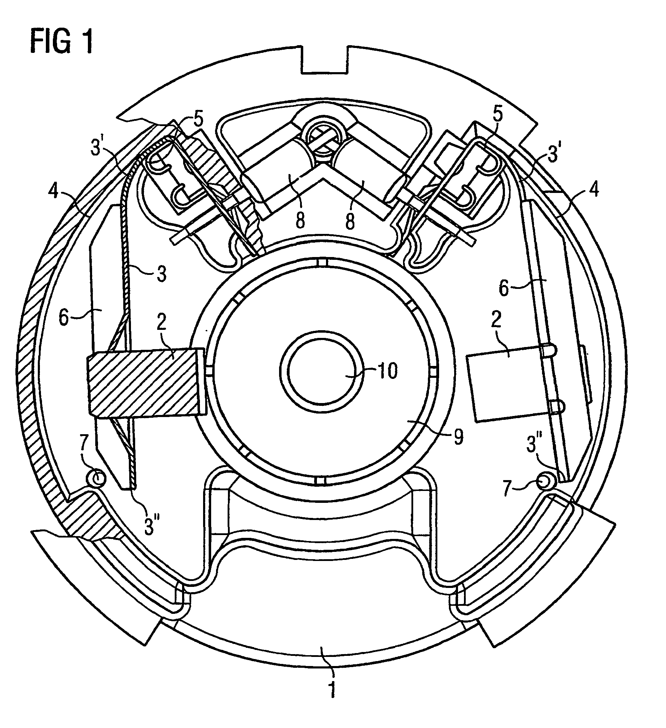

In Fig. 1 ist das Trägerteil 1 für Kommutatorbürsten 2 des Elektromotors in der Draufsicht und teilweise im Längsschnitt (schraffiert) schematisch und vereinfacht dargestellt. Die Kommutatorbürsten 2 sind dabei an jeweils einer gekrümmten Biegefeder 3 angeordnet, die jeweils an ihrer, der Kommutatorbürste 2 abgewandten Seite 3' in der Abwicklung eine Trapezform (nicht dargestellt) aufweist. Mit ihrer größten Kante, die der größten Seite des Trapezes entspricht, ist jede Biegefeder 3 zwischen einem äußeren Anschlag 4 und einem inneren Anschlag 5 eingespannt. Der äußere Anschlag 4 weist eine zur jeweiligen gekrümmten Biegefeder 3 geneigte Krümmung auf. Als innerer Anschlag 5 ist jeweils eine Steckerhülse angeordnet. Durch sie wird die jeweilige Biegefeder 3 mit elektrischem Strom beaufschlagt. Jede Biegefeder 3 weist im Bereich der jeweiligen Kommutatorbürste 2 an ihrer, der Kommutatorbürste 2 abgewandten Seite eine Materialversteifung 6 auf. Sie erhöht die mechanische Stabilität der Biegefeder 3. Für jede Biegefeder 3 ist an ihrem jeweiligen, der jeweiligen Einspannung abgewandten Ende 3'' ein senkrecht zur Längsrichtung des Trägerteils 1 einfahrbare Verrastung 7 angeordnet. In der rechten Hälfte von Fig. 1 ist die Biegefeder 3 dabei im verrasteten Zustand dargestellt. In der linken Hälfte von Fig. 1 ist die Biegefeder 3 im entriegelten Zustand dargestellt, so dass die Kommutatorbürste 2 direkt am Kommutator 9 anliegt. Direkt in der Mitte des an Elektromotor angeordneten Trägerteils 1 befindet sich der Kollektor 10 des Elektromotors. Zur Vermeidung von elektrostatischen Aufladungen sind ferner zwei Arbeitswiderstände 8 in besonders bevorzugter Ausgestaltung in dem Trägerteil 1 angeordnet.

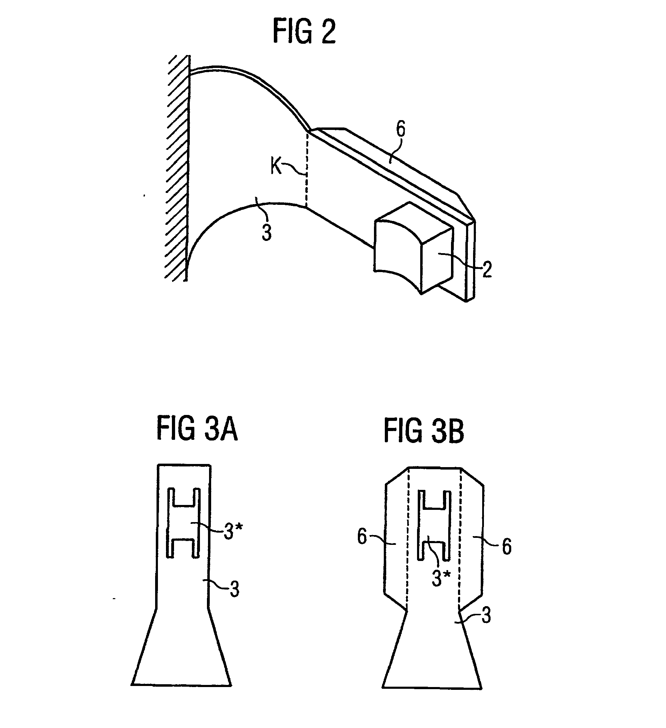

In Fig. 2 ist die Biegefeder 3 im eingespannten Zustand dargestellt. Die der Einspannung abgewandte, gedachte Kante K des Trapezes fluchtet mit der Materialversteifung 6. Dadurch ist sichergestellt, dass der Teil der Biegefeder 3, der in der Abwicklung eine Trapezform aufweist, die gesamte Biegebeanspruchung erfährt.

In Fig. 3a), b) sind zwei Formen von Biegefedern 3 in Form der Abwicklung dargestellt. Gemäß Fig. 3a) weist die Biegefeder 3 lediglich eine Aussparung 3* zur Anordnung der Kommutatorbürste (nicht dargestellt) auf. Diese Form der Biegefeder 3 dient nicht gleichzeitig als Materialversteifung (nicht dargestellt). Im Vergleich dazu ist in Fig. 3b) eine Biegefeder 3 dargestellt, die seitliche Lappen aufweist, die dann jeweils an der gestrichelten Linie umgebogen werden, und zwar abgewandt zur Kommutatorbürste (nicht dargestellt), wie dies in Fig. 2 dargestellt ist. Die umgebogenen Lappen dienen dann als Materialversteifung 6. Dabei ist vorteilhaft, dass die Biegefeder 3 und die Materialversteifung 6 aus einem Einzelteil bestehen.

## Patentansprüche

1. Trägerteil (1) für Kommutatorbürsten (2) eines Elektromotors, bei dem die Kommutatorbürsten (2) auf jeweils einer gekrümmten Biegefeder (3) angeordnet sind, die jeweils an ihrer, der Kommutatorbürste (2) abgewandten Seite (3') in der Abwicklung eine Trapezform aufweist, wobei die Biegefeder (3) im Bereich der jeweiligen Kommutatorbürste (2) an ihrer der Kommutatorbürste (2) abgewandten Seite eine Materialversteifung (6) aufweist, und wobei die Trapezform mit ihrer größten Kante, die der größten Seite des Trapezes entspricht, zwischen einem äußeren Anschlag (4) und einem inneren Anschlag (5) eingespannt ist und die der Einspannung abgewandte, gedachte Kante K des Trapezes mit der Materialversteifung (6) fluchtet, **dadurch gekennzeichnet, dass** der Bereich der Trapezform der Biegefeder vollständig für die Aufnahme von Biegekräften zur Verfügung steht.

2. Trägerteil (1) nach Anspruch 1, bei dem der äußere Anschlag (4) eine zur jeweiligen Biegefeder (3) geneigte Krümmung aufweist.

3. Trägerteil (1) nach Anspruch 1 oder Anspruch 2, bei dem als innerer Anschlag (5) eine Steckerhtilse angeordnet ist.

4. Trägerteile (1) nach einem der Ansprüche 1 bis 3, bei dem für mindestens eine Biegefeder (3) an ihrem der jeweiligen Einspannung abgewandten Ende (3") eine senkrecht zur Längsrichtung des Trägerteils (1) einfahrbare Verrastung (7) angeordnet ist.

5. Trägerteil nach einem der Ansprüche 1 bis 4, bei dem drei Kommutatorbürsten (2) einzeln auf jeweils einer Biegefeder (3) angeordnet sind.

## Claims

1. Mount part (1) for commutator brushes (2) of an electric motor, in which the commutator brushes (2) are arranged on in each case a curved torsion spring (3) which has, in each case at its end (3') which is remote from the commutator brush (2), a trapezoidal form when developed, the torsion spring (3) having, in the region of the respective commutator brush (2), a material reinforcement section (6) at its end which is remote from the commutator brush (2), and the trapezoidal form being clamped with its longest edge, which corresponds to the longest side of the trapezoid, between an outer stop (4) and an inner stop (5) and the imaginary edge K, which is remote from the clamping, of the trapezoid being aligned with the material reinforcement section (6), **characterized in that** the region of the trapezoidal form of the torsion spring is completely available for absorbing torsion forces.

2. Mount part (1) according to Claim 1, in which the outer stop (4) has a curvature which is at an angle with respect to the respective torsion spring (3).

3. Mount part (1) according to Claim 1 or Claim 2, in which a plug sleeve is arranged as the inner stop (5).

4. Mount part (1) according to one of Claims 1 to 3, in which, for at least one torsion spring (3), a latching section (7), which can be retracted perpendicular to the longitudinal direction of the mount part (1), is arranged at its end (3'') which is remote from the respective clamping.

5. Mount part according to one of claims 1 to 4, in which three commutator brushes (2) are arranged individually on in each case one torsion spring (3).

## Revendications

1. Support (1) pour balais (2) de collecteur d'un moteur électrique, dans lequel les balais (2) de collecteur sont disposés chacun sur un ressort de flexion coudé (3), qui a, sur son côté (3') opposé au balai (2) de collecteur, un développement de forme trapézoïdale, où le ressort de flexion (3) a, dans la zone du balai (2) de collecteur respectif, sur son côté opposé au balai (2) de collecteur, un renforcement (6) et où la forme trapézoïdale est insérée par sa plus grande arête, qui correspond au côté le plus long du trapèze, entre une butée extérieure (4) et une butée intérieure (5) et où l'arête virtuelle K du trapèze opposée à la fixation est en affleurement avec le renforcement (6) **caractérisé par le fait que** la zone de la forme trapézoïdale du ressort de flexion est complètement disponible pour absorber des forces de flexion.

2. Support (1) selon la revendication 1, dans lequel la butée extérieure (4) a une courbure penchée vers le ressort de flexion (3) respectif.

3. Support (1) selon la revendication 1 ou 2, dans lequel une douille enfichable est disposée comme butée intérieure (5).

4. Support (1) selon l'une des revendications 1 à 3, dans lequel, pour au moins un ressort de flexion (3), à son extrémité (3") opposée à sa fixation respective, est disposé un encliquetage escamotable (7) perpendiculaire à la direction longitudinale du support (1).

5. Support (1) selon l'une des revendications 1 à 4, dans lequel trois balais (2) de collecteur sont disposés séparément chacun sur un ressort de flexion (3).
